Europäisches Patentamt

European Patent Office

Office européen des brevets

(11) Publication number: **0 173 579**
**B1**

## (12) EUROPEAN PATENT SPECIFICATION

(45) Date of publication of patent specification: **11.01.89**

(51) Int. Cl.⁴: **F 16 J 15/32, F 16 J 15/16, F 04 D 29/12**

(21) Application number: **85306177.8**

(22) Date of filing: **30.08.85**

(54) Shaft seal for a compressor.

(30) Priority: **31.08.84 JP 180619/84**

(43) Date of publication of application:
**05.03.86 Bulletin 86/10**

(45) Publication of the grant of the patent:
**11.01.89 Bulletin 89/02**

(84) Designated Contracting States:
**DE FR GB IT SE**

(56) References cited:
**DE-A-2 021 775**
**DE-A-2 846 240**
**DE-A-3 244 209**
**DE-B-2 509 370**
**FR-A-1 391 888**
**GB-A- 821 692**

(73) Proprietor: **SANDEN CORPORATION**
**20 Kotobuki-cho**
**Isesaki-shi Gunma-ken (JP)**

(72) Inventor: **Terauchi, Kiyoshi**
**8-14 Heiwa-cho**
**Isesaki-shi Gunma, 372 (JP)**

(74) Representative: **Jackson, Peter Arthur et al**
**GILL JENNINGS & EVERY 53-64 Chancery Lane**
**London WC2A 1HN (GB)**

Courier Press, Leamington Spa, England.

## Description

This invention relates to a shaft seal in a compressor of the kind which is used in a refrigeration circuit.

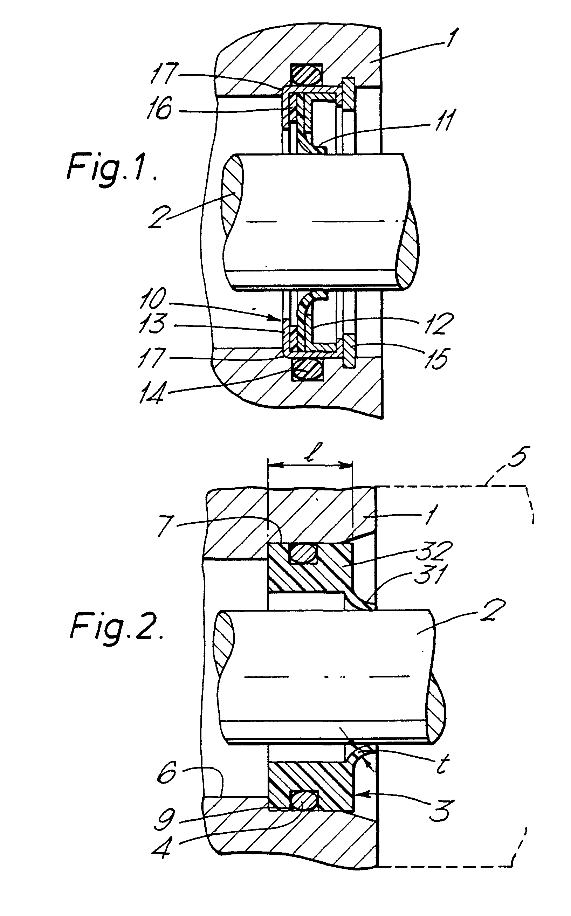

A seal assembly incorporating a lip seal, and of the kind which has been used as an oil seal, has recently been used as a shaft seal for a compressor. Figure 1 of the accompanying drawings shows one example of such an assembly. Thus the assembly 10 includes a lip element 11, which is a ring made from a thin body of flexible material, and two annular casings 12, 13 which have L-shaped cross-sections. An inner lip portion of the lip element 11 bears against the outer surface of a rotary shaft 2. The lip element 11 and an O-ring 16 are supported between the casings 12 and 13 and the O-ring 16 forms a seal between casings 12, 13 and lip element 11. The seal assembly 10 is inserted into the bore of a boss 1 and is held against a shoulder 17 in the bore through an O-ring 14 and a snap ring 15. When such a construction of oil seal is used as a shaft seal for an open type compressor, an O-ring 16 is needed to seal between casings 12, 13 and lip 11 because a large pressure difference exists between the inside and the outside of the compressor housing. Thus, because the number of parts is large in this type of seal assembly efficient assembly, miniaturization, low cost and high reliability cannot be achieved.

GB-A-821692 discloses an open type compressor comprising a housing, a rotary shaft which extends out of the housing into a hole in a boss outside the housing, and a shaft seal element mounted in the hole in the boss; the seal element comprising an integral annular body of plastics material which provides at least one flexible lip portion for sealingly contacting fully around the rotary shaft, and a holding portion from which the lip portion extends, the holding portion having an axial dimension larger than the thickness of the lip portion to form around the outer periphery of the holding portion an axially extending support surface which engages an inner peripheral surface of the hole and the end of the holding portion remote from the interior of the inner peripheral housing abutting a shoulder at an end of the surface. Such a compressor is hereinafter referred to as of the kind described. However the particular compressor described in that document, similarly to those described in DE-A-2021775 and DE-A-2509370, suffers the disadvantage that the seal element has to be held axially in position in the boss hole by shoulders at both ends and this complicates assembly. Also the body of the seal element has to be compressed and deformed to provide adequate sealing between the element and surrounding boss.

It is an overall object of the present invention to provide a shaft seal for an open type compressor which is easy to assemble and economical to manufacture.

It is another object of the present invention to provide such a shaft seal which can be miniaturized and is highly reliable in operation.

In accordance with the present invention, a compressor the kind described is characterised in that the end of the hole nearer to the interior of the housing opens into the housing over the full cross section surrounded by the inner peripheral surface; and in that the support surface includes a groove holding an O-ring which engages the inner peripheral surface to hold the element in the boss.

The invention will be explained more fully by reference to the accompanying drawings, in which:-

Figure 1 is an axial sectional view of a seal assembly currently in use; and,

Figures 2 to 6 are similar axial sectional views, each illustrating a different example of a seal assembly with a shaft seal constructed in accordance with the present invention.

Figure 2 shows a lip seal element 3, which comprises of a lip portion 31 and a holding portion 32 formed from a single integral piece of resilient plastics material. The element 3 forms a seal about a rotary drive shaft 2 of an open type compressor. The shaft 2 extends from the inside of a compressor housing, shown diagrammatically in dash-line as 5, to within a hole 6 in a boss 1 which is outside the compressor housing 5. During operation of the compressor, a large pressure difference exists between the area inside the compressor housing 5 and the area outside the housing 5.

The holding portion 32 is formed as a sufficiently large body or mass to function as a stable support for the lip portion 31 without the need for the supplemental supporting structures to support the seal assembly such as are illustrated in Figure 1. The axial length 1 (dimension in the direction of the rotary axis of shaft 2) of the holding portion 32 is thus substantially greater, for example, at least seven times greater, than the thickness t of the lip portion 31. Also, the holding portion 32 has a relatively large radial dimension. The relatively large axial dimension of the holding portion 32 results in an extended axial support surface, around the outer circumference of the holding portion 32, which faces the inside of an enlarged diameter bore 7 of the hole 6, within which the holding portion 32 is received. The outside axial end of the holding portion 32 abuts a shoulder formed at the end of the bore 7, and is held therein by an O-ring 4 carried in a groove 9 in the exterior surface (the extended axial support surface) of the holding portion 32. The radial thickness of the holding portion 32 is greater than the depth of the shoulder. Because of the relatively large size of holding portion 32, i.e., its axial and radial dimensions, particularly its large axial dimension, the seal element 3 can be held within the bore 7 of the boss 1 by the O-ring 4 without the need of additional support parts.

The lip portion 31 and holding portion 32 are formed as a single integral body of one plastics material. The lip portion 31 thus bears flexibly and with equal force around, and thus sealingly contacts, the full periphery of the outer surface of the rotary shaft 2. The lip portion 31 is formed at the end of the holding portion 32 which faces the inside of the housing 5; and the end of the lip portion 31 extends in the direction towards the inside of the housing 5.

In each of the views, the right hand side of the element 3 is the inside of compressor housing 5 and the left side is the outside of the compressor housing 5.

Because the element 3 is formed as a single integral body, and is held in the bore 7 by the O-ring 4, its construction is simple and it is easy to assemble. Furthermore, the element 3 effectively seals between the inside and the outside of the compressor.

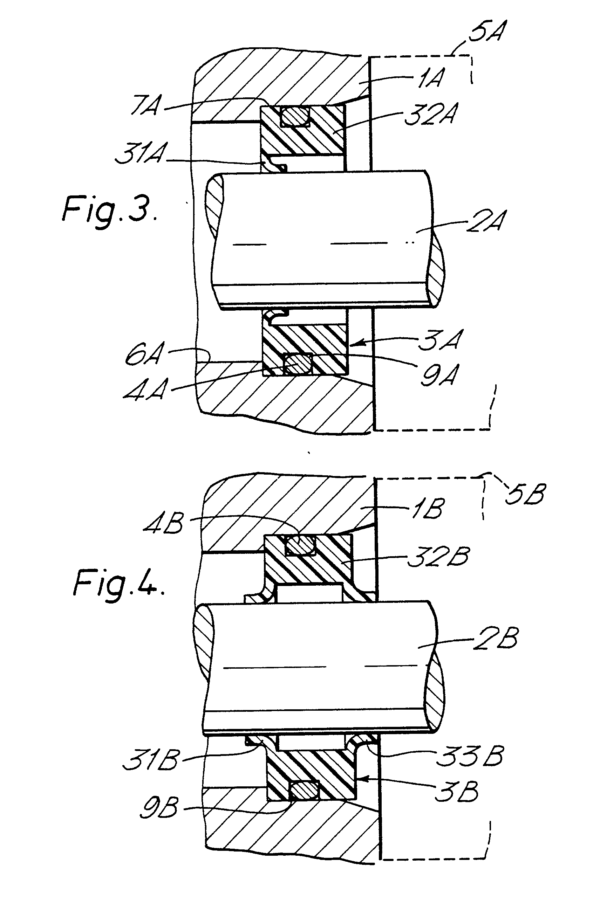

Other different examples are shown in Figure 3 to 6, with various components indicated by numerals followed by the suffixes A, B, C and D. Referring to Figure 3, the lip seal element 3A comprises a lip portion 31A and a holding portion 32A, again formed as a single integral plastics body. The lip portion 31A is formed at the end of the holding portion 32A, which is located facing the outside of the housing 5A. The end of lip portion 31A, however, bends back and extends in the direction towards the inside of the housing 5A, and sealingly contacts the entire outer surface of the rotary shaft 2A.

Referring to Figure 4, the lip seal element 3B comprises lip portions 31B, 33B and a holding portion 32B, formed as a single integral plastics body. The lip portions 31B, 33B both bear flexibly, and each with equal force about, and thus sealing contact, the entire outer surface of the rotary shaft 2B. The lip portion 31B is located at the axial end of holding portion 32B facing the outside of the housing 5B; and the lip portion 33B is located at the opposite axial end of the holding portion 32B facing the inside of the housing 5B. The end of the lip portion 31B extends in the direction towards the outside of the housing 5B and the end of the lip portion 33B extends in the direction towards the inside of housing 5B.

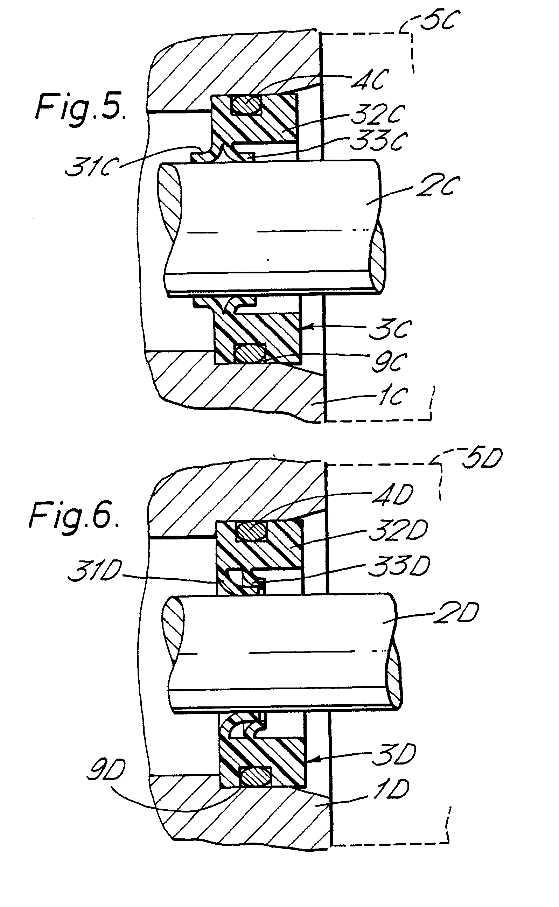

Referring to Figure 5, the lip seal element 3C comprises lip portions 31C, 33C and a holding portion 32C, formed as a single integral plastics body. The lip portions 31C, 33C bear flexibly and with equal force about, and thus sealing contact, the entire outer surface of the rotary shaft 2C. Both the lip portions 31C and 33C are formed at the end of the holding portion 32C facing the outside of the housing 5C. The end of the lip portion 31C extends in the direction towards the outside of the housing 5C; and the end of the lip portion 33C extends in the direction towards the inside of the housing 5C.

Referring to Figure 6, the lip seal element 3D comprises lip portions 31D, 33D and a holding portion 32D, formed as a single integral plastics body. The lip portion 31D bears flexibly and with equal force about, and thus sealingly contacts, the entire outer surface of the rotary shaft 2D; and the lip portion 33D bears flexibly and with equal force about the entire outer surface of the lip portion 31D to increase the contact sealing force of the lip portion 31D on the shaft 2D. The lip portion 31D is

formed at the end of the holding portion 32D facing the outside of the housing 5D and the lip portion 33D is formed inwardly of the lip portion 31D close to the axial centre of the holding portion 32D. The ends both of the lip portions 31D, 33D extend in the direction towards the inside of the housing 5D.

## Claims

1. An open type compressor comprising a housing (5), a rotary shaft (2) which extends out of the housing into a hole (6) in a boss (1) outside the housing, and a shaft seal element (3) mounted in the hole in the boss; the seal element (3) comprising an integral annular body of plastics material which provides at least one flexible lip portion (31, 33) for sealingly contacting fully around the rotary shaft, and a holding portion (32) from which the lip portion extends, the holding portion having an axial dimension larger than the thickness of the lip portion to form around the outer periphery of the holding portion an axially extending support surface which engages an inner peripheral surface (7) of the hole and the end of the holding portion remote from the interior of the housing abutting a shoulder at an end of the inner peripheral surface (7); characterised in that the end of the hole (6) nearer to the interior of the housing (5) opens into the housing over the full cross section surrounded by the inner peripheral surface (7); and in that the support surface includes a groove (9) holding an O-ring (4) which engages the inner peripheral surface (7) to hold the element in the boss.

2. A compressor according to claim 1, wherein the, or at least one of the, lip portions (31, 33), extends axially towards the interior of the housing.

3. A compressor according to claim 2, wherein the lip portion (31, 73) is formed at an axial end of the holding portion (32).

4. A compressor according to claim 2 or claim 3, wherein there are two of the lip portions (31B, 33B) each extending from a respective axial end of the holding portion (32B), the ends of the lip portions extending in opposite axial directions.

5. A compressor according to any one of claims 2 to 4, wherein there are two of the lip portions (31C, 33C) both extending from one axial end of the holding portion (32C) the ends of the lip portions extending in opposite axial directions.

6. A compressor according to claim 4 or claim 5, wherein the ends of the lip portions (31B, 33B; 31C, 33C) extend away from one another.

7. A compressor according to claim 2, wherein there are two of the lip portions (31D, 33D) extending at axially spaced locations from the holding portion (32D), the ends of both of the lip portions extending in the same axial direction.

8. A compressor according to claim 7, wherein one of the lip portions (33D) overlies and contacts a radially outer surface of the other lip portion (31D).

**Patentansprüche**

1. Kompressor offener Bauart mit einem Gehäuse (5), einer Drehwelle (2), die sich aus dem Gehäuse heraus in ein Loch (6) in einer Nabe (1) außerhalb des Gehäuses erstreckt, und einem in dem Loch der Nabe angebrachten Wellendichtungsteil (3); wobei das Dichtungsteil (3) einen einstückigen, ringförmigen Körper aus Kunststoffmaterial, der mindestens einen flexiblen Lippenabschnitt (31, 33) zum dichtenden Berühren rund um die Drehwelle vorsieht, und einen haltenden Abschnitt (32), von dem sich der Lippenabschnitt erstreckt, aufweist, der haltende Abschnitt eine axiale Abmessung größer als die Dicke des Lippenabschnittes aufweist zum Bilden einer sich um die äußere umlaufende Oberfläche des haltenden Abschnittes herum axial erstreckenden Stützoberfläche, die an die innere umlaufende Oberfläche (7) des Loches angreift, und das von dem Inneren des Gehäuses entfernte Ende des haltenden Abschnittes gegen einen Absatz an dem Ende der inneren umlaufenden Oberfläche (7) stößt; dadurch gekennzeichnet, daß das dem Inneren des Gehäuses (5) nähere Ende des Loches sich in das Gehäuse über den vollen Querschnitt, der von der inneren umlaufenden Oberfläche (7) umgeben ist, öffnet; und daß die Stützoberfläche eine einen O-Ring (4) aufnehmende Rille (9) aufweist, wobei der O-Ring an die innere umlaufende Oberfläche (7) zum Halten des Teiles in der Nabe angreift.

2. Kompressor nach Anspruch 1, bei dem die oder mindestens einer der Lippenabschnitte (31, 33) sich axial zu dem Inneren des Gehäuses erstreckt.

3. Kompressor nach Anspruch 2, bei dem der Lippenabschnitt (31, 73) an einem axialen Ende des haltenden Abschnittes (32) gebildet ist.

4. Kompressor nach Anspruch 2 oder 3, bei dem zwei Lippenabschnitte (31B, 33B) vorhanden sind, von denen sich jeder von einem entsprechenden axialen Ende des haltenden Abschnittes (32B) erstreckt, wobei die Enden der Lippenabschnitte sich in entgegengesetzte axiale Richtungen erstrecken.

5. Kompressor nach einem der Ansprüche 2 bis 4, bei dem zwei Lippenabschnitte (31C, 33C) vorhanden sind, die sich beide von einem axialen Ende des haltenden Abschnittes (32C) erstrecken, wobei die Enden der Lippenabschnitte sich in entgegengesetzte axiale Richtungen erstrecken.

6. Kompressor nach Anspruch 4 oder 5, bei dem sich die Enden der Lippenabschnitte (31B, 33B; 31C, 33C) voneinander weg erstrecken.

7. Kompressor nach Anspruch 2, bei dem zwei Lippenabschnitte (31D, 33D) vorhanden sind, die sich von in einem axialen Abstand voneinander angeordneten Stellen von dem haltenden Abschnitt (32D) erstrecken, wobei sich beide Lippenabschnitte in die gleiche axiale Richtung erstrecken.

8. Kompressor nach Anspruch 7, bei dem einer der Lippenabschnitte (33D) über einer radial äußeren Oberfläche des anderen Lippenabschnittes (31D) liegt und ihn berührt.

**Revendications**

1. Compresseur de type ouvert comprenant un carter (5), un arbre rotatif (2) sortant du carter pour pénétrer dans un alésage (6) d'un bossage (1) situé à l'extérieur du carter, et un élément d'étanchéité d'arbre (3) monté dans l'alésage du bossage; l'élément d'étanchéité (3) comprenant un corps annulaire en matière plastique d'une seule pièce formant au moins une partie de lèvre flexible (31, 33) destinée à former un contact d'étanchéité tout autour de l'arbre rotatif, et une partie de fixation (32) sur laquelle la partie de lèvre fait saillie, la partie de fixation présentant une dimension axiale supérieure à l'épaisseur de la partie de lèvre pour former autour de la périphérie extérieure de la partie de fixation une surface de support axiale s'engageant contre une surface périphérique intérieure (7) de l'alésage, et l'extrémité de la partie de fixation la plus éloignée de l'intérieur du carter venant buter contre un épaulement situé à une extrémité de la surface périphérique intérieure (7); compresseur caractérisé en ce que l'extrémité de l'alésage (6) la plus proche de l'intérieur du carter (5) débouche dans le carter sur toute la section transversale entourée par la surface périphérique intérieure (7); et en ce que la surface de support comporte une rainure (9) maintenant un joint torique (4) qui s'engage contre la surface périphérique intérieure (7) pour maintenir l'élément dans le bossage.

2. Compresseur selon la revendication 1, caractérisé en ce que la partie de lèvre ou l'une au moins des parties de lèvres (31, 33), s'étend axialement vers l'intérieur du carter.

3. Compresseur selon la revendication 2, caractérisé en ce que la partie de lèvre (31, 33) est formée à une extrémité axiale de la partie de fixation (32).

4. Compresseur selon l'une quelconque des revendications 2 et 3, caractérisé en ce qu'il y a deux parties de lèvres (31B, 33B) partant chacune d'une extrémité axiale respective de la partie de fixation (32B), les extrémités des parties de lèvres s'étendant dans des directions axiales opposées.

5. Compresseur selon l'une quelconque des revendications 2 à 4, caractérisé en ce qu'il y a deux parties de lèvres (31C, 33C) partant toutes les deux d'une extrémité aixale de la partie de fixation (32C), les extrémités des parties de lèvres s'étendant dans des directions axiales opposées.

6. Compresseur selon l'une quelconque des revendications 4 et 5, caractérisé en ce que les extrémités des parties de lèvres (31B, 33B; 31C, 33C) s'écartent les unes des autres.

7. Compresseur selon la revendication 2, caractérisé en ce qu'il y a deux parties de lèvres (31D, 33D) partant de la partie de fixation (32D) dans des positions axialement espacées, les extrémités des deux parties de lèvres s'étendant dans la même direction axiale.

8. Compresseur selon la revendication 7, caractérisé en ce que l'une des parties de lèvres (33D) recouvre et vient en contact avec une surface radialement extérieure de l'autre partie de lèvre (31D).

Fig.1.

Fig.2.

Fig.3.

5A
1A
7A
32A
31A
2A
6A
3A
4A
9A

Fig.4.

5B
1B
4B
32B
2B
31B
33B
9B
3B

Fig.5.

Fig.6.